# EUROPEAN PATENT APPLICATION

(11) **EP 1 619 909 A1**
(43) Date of publication of application: **25.01.2006**
(21) Application number: 05011153.3
(22) Date of filing: 23.05.2005
(51) Int. Cl.: H04Q 7/32

(54) **Method and apparatus for transmitting and outputting data in voice communication**

(30) Priority: 20.07.2004 KR 2004056481
(71) Applicant: Pantech&Curitel Communications, Inc., Seoul (KR)
(72) Inventor: Gi-Tae, Cho, Seongnam-Si Kyunggi-Do (KR)
(74) Representative: Grünecker, Kinkeldey, Stockmair & Schwanhäusser Anwaltssozietät

(57) **Abstract**

Disclosed is a method and apparatus for transmitting and outputting data in voice communication over a traffic channel. The apparatus includes: a signal generator for generating a low frequency signal corresponding to a key signal inputted during voice communication; a signal synthesizer for synthesizing the low frequency signal and a voice signal; a radio communication unit for transmitting the synthesized signal over the traffic channel; a signal separator for separating a low frequency signal from a signal received and processed by the radio communication unit; and a data output unit for detecting a frequency of the separated low frequency signal and outputting data indicated by the detected frequency.

## Description

### BACKGROUND OF THE INVENTION

This application claims the priority of Korean Patent Application No. 2004-56481, filed on July 20, 2004, in the Korean Intellectual Property Office, the disclosure of which is incorporated herein in its entirety by reference.

### 1. Field of the Invention

The present invention relates to data transmission using a mobile terminal and, more particularly, to an apparatus and a method for transmitting data over a traffic channel.

### 2. Description of Related Art

With the development of electronic communication technology and semiconductor chip technology, the size of mobile terminals is increasingly smaller. Although such mobile terminals have been developed for the purpose of voice communication only, they are gradually being equipped with supplementary functions such as electronic note, camera, and music file reproduction functions.

In general, such supplementary functions are intended to be executed independently of one another. That is, a user of the mobile terminal can input and register his/her personal information by entering into an electronic note mode, take a picture by entering into a camera mode and play a music file in a corresponding mode.

Although most functions added to mobile terminals are programmed to be executed in independent modes, users often desire to execute such functions while they are in voice communication.

For example, to transmit Internet access information (e.g., URL) to the other party during conversation, a user currently has no choice but to transmit it to the other party through his/her voice. However, as Internet access information consists of English alphabetic characters in most cases, the Internet access information may not be correctly transferred due to error in pronunciation or listening. In order to overcome such a problem, there is a need for mobile terminals in which input characters can be transmitted during conversation.

In addition, there is a need for mobile terminals in which character transmission and voice communication can be alternately performed.

### SUMMARY OF THE INVENTION

The present invention provides a method and apparatus for transmitting and outputting data, which is capable of allowing a user to transmit necessary information to a called party during communication.

The present invention also provides a method and apparatus for transmitting and outputting data, which is capable of allowing a user to remotely control the resources of a called party's terminal during communication within the limit permitted by the called party.

In accordance with an aspect of the present invention, there is provided an apparatus for transmitting and outputting data in voice communication over a traffic channel, the apparatus comprising: a signal generator for generating a low frequency signal corresponding to a key signal inputted during communication; a signal synthesizer for synthesizing the low frequency signal and a voice signal; a radio communication unit for transmitting the synthesized signal over the traffic channel; a signal separator for separating a low frequency signal from a signal received and processed by the radio communication unit; and a data output unit for detecting a frequency of the separated low frequency signal and outputting data indicated by the detected frequency.

The signal generator may comprise: a keypad for generating a key signal; a low frequency oscillation controller for controlling oscillation of a low frequency signal corresponding to the generated key signal; and a low frequency oscillator for generating different frequencies using the low frequency oscillation controller.

The low frequency oscillator may generate low frequency signals below 300Hz.

The data output unit may comprise: a frequency detector for detecting a frequency of the separated low frequency signal; a memory for storing data indicated by the frequency of the low frequency signal; and a data output controller for reading out the data indicated by the detected frequency from the memory and outputting the data.

The data stored in the memory may be at least one of character data, avatar image data, and audio output data.

The data output controller may read from the memory and display avatar image data mapped to detected caller information, and change the displayed avatar image data according to data indicated by the detected frequency.

The signal separator may be a low-pass filter for extracting a low frequency signal of below 300Hz from the received signal.

The signal separator may comprise: a first filter for extracting a voice signal above or equal to 300Hz from the received signal; and a second filter for extracting a low frequency signal of below 300Hz from the received signal.

In accordance with another aspect of the present invention, there is provided a method of transmitting and outputting data in voice communication over a traffic channel, the method comprising the steps of: checking whether or not there is a key input for generating a low frequency signal during communication; generating a low frequency signal corresponding to the inputted key signal; synthesizing the generated low frequency signal and a voice signal and transmitting the synthesized signal over a traffic channel; separating a low frequency signal from a signal received and processed by a radio communication unit; and detecting a frequency of the separated low frequency signal and outputting data indicated by the detected frequency.

The method may further comprise the step of displaying data indicated by the low frequency signal corresponding to the inputted key signal.

The low frequency signal may have a frequency of below 300Hz.

The data outputted according to the frequency of the low frequency signal may be at least one of character data, avatar image data, and audio output data.

In accordance with another aspect of the present invention, there is provided a method of transmitting and outputting data in voice communication over a traffic channel, the method comprising the steps of: detecting caller information; reading avatar image data mapped to the detected caller information from a memory and displaying the avatar image data; separating a low frequency signal from a signal received and processed by a radio communication unit during communication; and detecting a frequency of the separated low frequency signal and changing the displayed avatar image data according to data indicated by the detected frequency.

The method may further comprise the steps of: checking whether or not there is a key input for generating a low frequency signal during communication; generating a low frequency signal corresponding to the inputted key signal; and synthesizing the generated low frequency signal and a voice signal and transmitting the synthesized signal over a traffic channel.

The method may further comprise the step of displaying data indicated by the low frequency signal corresponding to the inputted key signal.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view showing a construction of an apparatus for transmitting and outputting data in a mobile terminal in accordance with an embodiment of the present invention;
FIG. 2 is a view showing a detailed construction of the apparatus for transmitting and outputting data shown in FIG. 1;
FIG. 3 is a flowchart showing a data transmission method in accordance with another embodiment of the present invention; and
FIG. 4 is a flowchart showing a process of outputting data transmitted using the method shown in Fig. 3.

### DETAILED DESCRIPTION OF THE INVENTION

Exemplary embodiments of the present invention will now be described below in more detail with reference to the accompanying drawings. Like numerals refer to like elements throughout the specification.

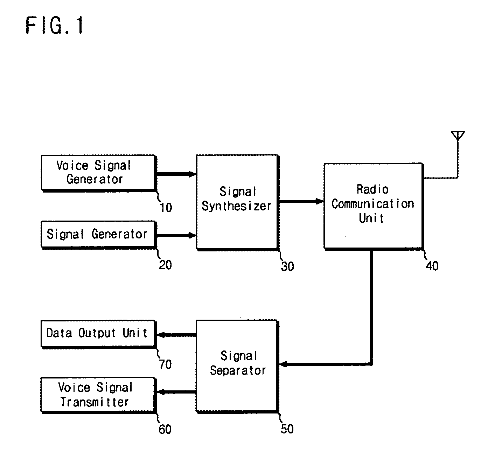

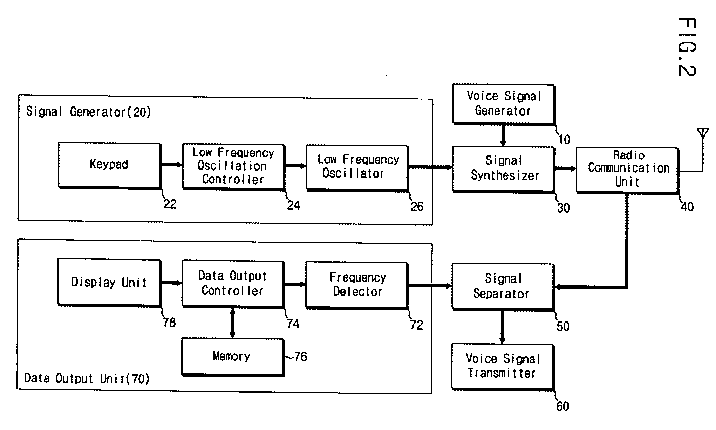

FIG. 1 is a view showing a construction of an apparatus for transmitting and outputting data in a mobile terminal in accordance with an embodiment of the present invention. FIG. 2 is a view showing a detailed construction of the apparatus for transmitting and outputting data shown in FIG. 1.

A voice signal generator 10, which is equipped into a typical mobile terminal, converts a user's voice into an electrical voice signal, removes noise, and amplifies the voice signal.

A signal generator 20 generates and outputs a low frequency signal corresponding to a key signal inputted during voice communication. The low frequency signal refers to a signal whose frequency is below 300 Hz. Here, the upper limit of the frequency can be varied.

The signal generator 20 includes a keypad 22 for generating a key signal, a low frequency oscillation controller 24 for controlling oscillation of a low frequency signal corresponding to the key signal, and a low frequency oscillator 26 for generating different frequencies using the low frequency oscillation controller 24.

The low frequency oscillation controller 24 can be integrated, together with a data output controller 74 to be described below, into a single control module. The low frequency oscillation controller 24 controls generation of the low frequency signal according to a key signal input only when the mobile terminal is set to a "data-transmission-during-voice-communication mode". In order to control the generation of the low frequency signal according to the key signal input, the low frequency oscillation controller 24 has an internal memory in which frequencies of the low frequency signals are mapped to correspond to key inputs as in table 1 below.

**[Table 1]**

| key input | frequency | output data format |
|---|---|---|
| 1 | 30Hz | 1 |
| : | : | : |
| A | 40Hz | A |
| f | 50Hz | f |
| : | : | : |
| □ | 100Hz | □ |
| * | 150Hz | * |
| specific key 1 | 220Hz | avatar image data n |
| specific key 2 | 290Hz | audio output data |

As expressed in the Table 1, different frequencies and output data are mapped to each key. The "avatar image data n" and "audio output data" in Table 1 are mapped to specific keys in the form of output data used for remote control of the resources of the mobile terminal. However, since the number of keys in the terminal is limited, it is preferable that keys to control the resources of the terminal are assigned through a menu rather than through use of the specific keys. Also, upon inputting a previously agreed-upon key combination, it is possible to obtain an effect to transmit output data by sequentially generating different frequencies or by mixing different frequencies.

Meanwhile, the signal synthesizer 30 synthesizes a voice signal and a low frequency signal which are outputted from the voice signal generator 10 and the signal generator 20, respectively. A radio communication unit 40 transmits the synthesized signal outputted from the signal synthesizer 30 over a traffic channel. The radio communication unit 40 includes a data modulator for modulating the synthesized signal into a signal suitable for wireless transmission, and an RF unit for upconverting the frequency of the modulated signal and transmitting it over an antenna. The radio communication unit 40 further includes a data demodulator for downconverting the frequency of a radio signal received through the RF unit and demodulating the downconverted signal.

A signal separator 50 separates and outputs a low frequency signal from the received signal that is processed and demodulated in the radio communication unit 40.

The signal separator 50 can employ only a low pass filter for extracting a low frequency signal of below 300Hz from the received signal. In another embodiment of the present invention, the signal separator 50 can be configured to employ both a highpass filter (HPF) for extracting only a voice signal above or equal to 300Hz from the received signal and a low-pass filter (LPF) for extracting only a low frequency signal of below 300Hz from the received signal.

A data output unit 70 detects the frequency of the low frequency signal separated from the signal separator 50, reads out and outputs data indicated by the detection frequency from a memory 76.

As shown in FIG. 2, the data output unit 70 includes a frequency detector 72 for detecting the frequency of the separated low frequency signal, and a memory 76 for storing data indicated by the frequency of the detected low frequency signal. The memory 76 stores table data as shown in Table 1. The memory 76 may be integrated with an internal memory included in the low frequency oscillation controller 24.

The data output unit 70 further includes a data output controller 74. The controller 74 reads output data indicated by the frequency detected by the frequency detector 72 and outputs the data through a display unit 78 or an audio output unit (not shown).

In FIG. 2, a voice signal transmitter 60 is responsible for converting the voice signal separated in the signal separator 50 into an audible sound and outputting the audible sound.

The mobile terminal in accordance with an embodiment of the present invention may further include a caller information detector that has been widely used. In this case, the data output controller 74 may read from the memory 76 and display avatar image data mapped to caller information detected in the caller information detector. In addition, the data output controller 74 may change the displayed avatar image to other images, such as crying or smiling appearance, according to the frequencies detected in the frequency detector 72.

Procedures will now be described of transmitting data to a called party's mobile terminal during voice communication in a mobile terminal with the above-mentioned configuration and outputting the transmitted data in the called party's mobile terminal.

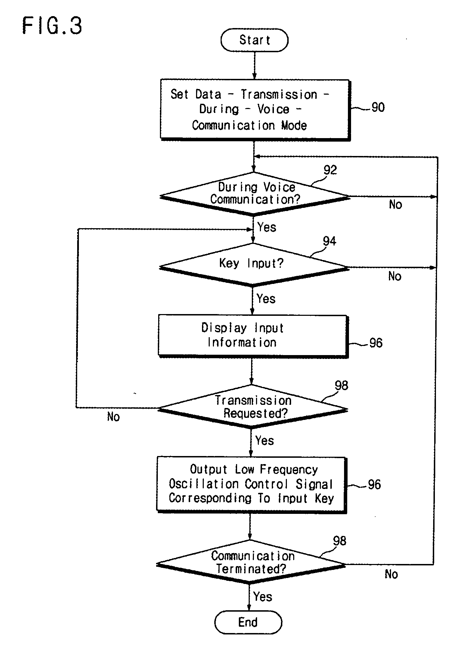

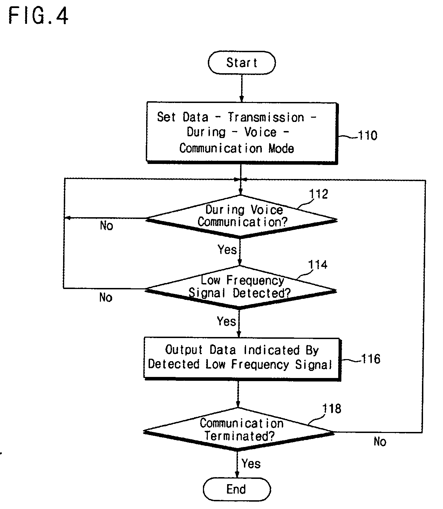

FIG. 3 is a flowchart showing a data transmission method in accordance with another embodiment of the present invention. FIG. 4 is a flowchart showing a process of outputting data transmitted using the method shown in Fig. 3.

Referring to FIG. 3, a user sets his/her mobile terminal to "data-transmission-during-voice-communication mode" in order to transmit/receive information to/from a called party's terminal during voice communication (step 90).

When both parties are communicating with each other in the data-transmission-during-voice-communication mode (step 92), the low frequency oscillation controller 24 checks whether or not there is a key input through the keypad for generating a low frequency signal (step 94).

If a key is input, the low frequency oscillation controller 24 displays key input data on the display unit 78 (step 96), and checks whether or not there is a transmission request of a low frequency signal through the keypad 22 (step 98). Since a plurality of numerals or characters are generally combined together to compose meaningful information, the low frequency oscillation controller 24 displays key data on the display unit 78 whenever the user inputs the key data using the keypad 22. In the following description, a character string inputted by the user is assumed to be "curitel.com".

When the character string "curitel.com" is completely inputted, the user requests transmission of the character string using an agreed key (step 98). The low frequency oscillation controller 24 outputs a low frequency oscillation control signal to generate frequencies corresponding to the character string ("curitel.com") (step 100). The low frequency oscillator 26 generates a low frequency signal of below 300Hz according to the low frequency oscillation control signal and outputs the low frequency signal to the signal synthesizer 30.

The signal synthesizer 30 synthesizes the low frequency signal of below 300Hz generated in the low frequency oscillator 26 and the voice signal above or equal to 300Hz outputted from the voice signal generator 10 and outputs the synthesized signal to the radio communication unit 40. The voice signal including a series of character information is modulated, frequency up-converted, and transmitted over a traffic channel.

Referring to FIG. 4, a called party's mobile terminal that receives and outputs the low frequency signal is also set to the "data-transmission-during-voice-communication mode" (step 110) and is in communication (step 112). At this time, the received signal processed in the radio communication unit 40 is inputted to the signal separator 50.

In this case, the received signal in which a low frequency signal of below 300Hz and a voice signal above or equal to 300Hz are synthesized is separated into a low frequency signal below 300Hz and a voice signal above or equal to 300Hz by the LPF and HPF of the signal separator 50, respectively. Each of the separated signals is inputted into the data output unit 70 and the voice signal transmitter 60. The voice signal transmitter 60 converts the voice signal of the called party into an audible sound and outputs the audible sound.

Meanwhile, the frequency detector 72 in the data output unit 70 detects the frequency of the low frequency signal that is separated and output by the signal separator 50 (step 114). The frequency of the low frequency signal can be calculated by counting the peak-to-peak cycle of the low frequency signal. The calculated frequency of the low frequency signal is a detection frequency, which is applied to the data output controller 74.

The data output controller 74 reads out data indicated by the frequency detected in the frequency detector 72 from the memory 76 and outputs the data through the display unit 78.

Accordingly, a user in voice communication can be informed that information received from a calling party is "curitel.com", and store the information in his/her mobile terminal.

Although the above-mentioned embodiment of the present invention has been described on the assumption that character data is transmitted, control data used for controlling resources of a called party's mobile terminal can be transmitted together with the voice signal over a traffic channel without additional alteration. The called party's audio output such as bell sound or speech volume can be adjusted by the control data.

Another embodiment of the present invention will now be described of changing an avatar image displayed on a called party's mobile terminal through data transmission.

A mobile terminal can be allowed to display different avatars for individual callers using an application program. That is, when a call is made by a calling party's mobile terminal to which an avatar is mapped, the mapped avatar can be read from a memory and displayed on a display unit.

If a called party's mobile terminal receives a low frequency signal for changing the displayed avatar image from the calling party's mobile terminal while communicating with the calling party, the currently displayed avatar image can be changed depending on the frequency of the low frequency signal. The avatar image can be changed by simply changing facial expressions of the avatar, such as smiling look, crying look, or scowling look, or changing 3-dimensional motions of the avatar.

Although not described in the above-mentioned embodiments of the present invention, it is preferable to display output data corresponding to a key input for generating a low frequency signal on a display unit so that a user can be informed that data to be transmitted has been correctly inputted.

As described above, in accordance with the present invention, it is possible to eliminate problems occurring due to verbal transmission of information, such as error in pronunciation or listening since a low frequency signal corresponding to a key signal inputted during communication is transmitted to a called party's mobile terminal together with a voice signal over a traffic channel, and the called party's mobile terminal outputs character data indicated by the low frequency signal divided from the received signal.

Further, it is possible to remotely control an avatar image displayed on the called party's mobile terminal over the traffic channel within the limit permitted by the called party, which leads to an increase in the usage of the mobile terminal.

While the present invention has been described with reference to exemplary embodiments thereof, it will be understood by those skilled in the art that various changes in form and details may be made therein without departing from the scope of the present invention as defined by the following claims.

## Claims

1. An apparatus for transmitting and outputting data in voice communication over a traffic channel, the apparatus comprising:
a signal generator for generating a low frequency signal corresponding to a key signal inputted during communication;
a signal synthesizer for synthesizing the low frequency signal and a voice signal;
a radio communication unit for transmitting the synthesized signal over the traffic channel;
a signal separator for separating a low frequency signal from a signal received and processed by the radio communication unit; and
a data output unit for detecting a frequency of the separated low frequency signal and outputting data indicated by the detected frequency.

2. The apparatus of claim 1, wherein the signal generator comprises:
a keypad for generating a key signal;
a low frequency oscillation controller for controlling oscillation of a low frequency signal corresponding to the generated key signal; and
a low frequency oscillator for generating different frequencies using the low frequency oscillation controller.

3. The apparatus of claim 2, wherein the low frequency oscillator generates low frequency signals below 300Hz.

4. The apparatus of claim 1, wherein the data output unit comprises:
a frequency detector for detecting a frequency of the separated low frequency signal;
a memory for storing data indicated by the frequency of the low frequency signal; and
a data output controller for reading out the data indicated by the detected frequency from the memory and outputting the data.

5. The apparatus of claim 2, wherein the data output unit comprises:
a frequency detector for detecting a frequency of the separated low frequency signal;
a memory for storing data indicated by the frequency of the low frequency signal; and
a data output controller for reading out the data indicated by the detected frequency from the memory and outputting the data.

6. The apparatus of claim 4, wherein the data stored in the memory is at least one of character data, avatar image data, and audio output data.

7. The apparatus of claim 5, wherein the data stored in the memory is at least one of character data, avatar image data, and audio output data.

8. The apparatus of claim 4, wherein the data output controller reads from the memory and displays avatar image data mapped to detected caller information, and changes the displayed avatar image data according to data indicated by the detected frequency.

9. The apparatus of claim 5, wherein the data output controller reads from the memory and displays avatar image data mapped to detected caller information, and changes the displayed avatar image data according to the detected frequency.

10. The apparatus of claim 1, wherein the signal separator is a low-pass filter for extracting a low frequency signal of below 300Hz from the received signal.

11. The apparatus of claim 1, wherein the signal separator comprises:
a first filter for extracting a voice signal above or equal to 300Hz from the received signal; and
a second filter for extracting a low frequency signal of below 300Hz from the received signal.

12. A method of transmitting and outputting data in voice communication over a traffic channel, the method comprising the steps of:
checking whether or not there is a key input for generating a low frequency signal during voice communication;
generating a low frequency signal corresponding to the inputted key signal;
synthesizing the generated low frequency signal and a voice signal and transmitting the synthesized signal over a traffic channel;
separating a low frequency signal from a signal received and processed by a radio communication unit; and
detecting a frequency of the separated low frequency signal and outputting data indicated by the detected frequency.

13. The method of claim 12, further comprising the step of displaying data indicated by the low frequency signal corresponding to the inputted key signal.

14. The method of claim 12, wherein the low frequency signal has a frequency of below 300Hz.

15. The method of claim 13, wherein the low frequency signal has a frequency of below 300Hz.

16. The method of claim 12, wherein the data outputted according to the frequency of the low frequency signal is at least one of character data, avatar image data, and audio output data.

17. The method of claim 13, wherein the data outputted according to the frequency of the low frequency signal is at least one of character data, avatar image data, and audio output data.

18. A method of transmitting and outputting data in voice communication over a traffic channel, the method comprising the steps of:
detecting caller information;
reading avatar image data mapped to the detected caller information from a memory and displaying the avatar image data;
separating a low frequency signal from a signal received and processed by a radio communication unit during communication; and
detecting a frequency of the separated low frequency signal and changing the displayed avatar image data according to data indicated by the detected frequency.

19. The method of claim 18, further comprising the steps of:
checking whether or not there is a key input for generating a low frequency signal during communication;
generating a low frequency signal corresponding to the inputted key signal; and
synthesizing the generated low frequency signal and a voice signal and transmitting the synthesized signal over a traffic channel.

20. The method of claim 19, further comprising the step of displaying data indicated by the low frequency signal corresponding to the inputted key signal.
